(19) 
Europäisches Patentamt
European Patent Office
Office européen des brevets

(11) **EP 2 918 483 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(51) Int Cl.:
***B62D 59/04*** *(2006.01)*

(21) Anmeldenummer: **14196935.2**

(22) Anmeldetag: **09.12.2014**

(54) **Verfahren zum Rangieren eines doppelachsigen Anhängers mittels eines Rangierantriebs sowie Rangierantrieb**

Method for manoeuvring a dual axle trailer by means of a manoeuvring drive and manoeuvring drive

Procédé de manoeuvre d'une remorque à essieu tandem au moyen d'un dispositif de manoeuvre et dispositif de manoeuvre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2014 DE 102014100205**

(43) Veröffentlichungstag der Anmeldung:
**16.09.2015 Patentblatt 2015/38**

(73) Patentinhaber: **Truma Gerätetechnik GmbH & Co. KG**
**85640 Putzbrunn (DE)**

(72) Erfinder:
- **Möhring, Mario**
  **85408 Gammelsdorf (DE)**
- **Gumpp, Daniel**
  **86356 Neusäß (DE)**
- **Müller, Jörg**
  **85658 Egmating (DE)**
- **Venschott, Mathias**
  **81825 München (DE)**

- **Schmid, Tobias**
  **85435 Erding (DE)**
- **Postu, Alin**
  **85521 Ottobrunn (DE)**
- **Müller, Jochen**
  **85665 Moosach (DE)**
- **Kröger, Ulrike**
  **85622 Feldkirchen (DE)**
- **Fernandez, Ana-Maria**
  **81739 München (DE)**
- **Kastenmeyer, Herbert**
  **83043 Bad Aibling (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A1- 1 790 555     DE-A1-102011 012 089**
**GB-A- 2 466 086**

EP 2 918 483 B1

## Beschreibung

Die Erfindung betrifft ein Verfahren zum Rangieren eines doppelachsigen Anhängers mittels eines Rangierantriebs sowie einen Rangierantrieb.

Rangierantriebe dienen dazu, einen Anhänger, beispielsweise einen Wohnwagen, dann mittels Hilfskraft rangieren zu können, wenn er nicht an eine Zugmaschine angekoppelt ist. Hierzu weisen übliche Rangierantriebe zwei Antriebseinheiten auf, die den Rädern auf den beiden Seiten des Anhängers zugeordnet sind und diese antreiben können, sowie eine Steuerung und eine Energieversorgung. Bei schweren, 2-achsigen Anhängern können derzeit bis zu 4 Antriebseinheiten eingesetzt werden.

Die Antriebseinheiten enthalten einen Antriebsmotor, dem eine Motorsteuerung zugeordnet ist, ein Getriebe und eine Antriebsrolle. Im Ausgangszustand, also wenn der Rangierantrieb nicht benötigt wird, befindet sich die Antriebsrolle im Abstand von der Lauffläche des Rades, dem sie zugeordnet ist. Wenn der Rangierantrieb eingesetzt werden soll, wird die Antriebsrolle mit der Lauffläche in Eingriff gebracht, so dass eine Drehung des Antriebsmotors dazu führt, dass sich auch das entsprechende Rad des Anhängers dreht.

Die Steuerung, die auch als Zentralsteuerung bezeichnet werden kann, dient dazu, die Antriebsmotoren anzusteuern und auch dazu, die Antriebseinheiten zu aktivieren, so dass der Eingriff zwischen der Antriebsrolle und dem entsprechenden Rad des Anhängers hergestellt wird.

Als Energieversorgung wird üblicherweise eine aufladbare Batterie verwendet, welche die elektrische Energie bereitstellt, mit der die Antriebsmotoren, z.B. bürstenlose Elektromotoren, versorgt werden.

Das Rangieren eines einachsigen Anhängers auf engem Raum stellt in technischer Hinsicht keine größeren Anforderungen dar, da der Anhänger bei Bedarf auf der Stelle gedreht werden kann. Dabei werden die Räder des Anhängers in entgegengesetzten Richtungen angetrieben, so dass sie auf einer Kreisbahn rollen, deren Durchmesser dem Abstand zwischen den Rädern entspricht.

Bei einem zweiachsigen Anhänger ist das Rangieren auf engem Raum dagegen nicht so einfach. Wird ein zweiachsiger Anhänger auf der Stelle gedreht, können die Radpaare auf jeder Seite des Anhängers nicht auf einer Kreisbahn laufen, da der Mittelpunkt der Laufbahn jedes Rades gegenüber der entsprechenden Radachse versetzt ist. In der Theorie wird der Anhänger, wenn er auf der Stelle gedreht wird, um eine Hochachse gedreht, die mittig zwischen den beiden Radachsen liegt, also im Schnittpunkt von Diagonalen eines Rechtecks, das definiert ist durch die Aufstandspunkte der vier Räder des Anhängers. Von dieser Drehachse ist jede Radachse um die Hälfte des Abstandes zwischen den beiden Radachsen entfernt.

Die Folge hiervon ist, dass die beiden Räder auf jeder Seite des Anhängers, wenn dieser auf engem Raum oder gar auf der Stelle gedreht wird, gegeneinander verspannt werden. Eines der Räder wird an seiner Aufstandsfläche nach außen gezogen, während das andere Rad an seiner Aufstandsfläche nach innen gedrückt wird. Dieser Effekt ist bekannt von mehrachsigen Sattelschlepper-Aufliegern, wenn die Zugmaschine eine enge Kurve fährt. Bei einem zweiachsigen Auflieger, der eine scharfe Rechtskurve fahren muss, werden die Aufstandsflächen der Räder der vorderen Radachse in Fahrtrichtung nach links gedrückt, während die Aufstandsflächen der Räder der hinteren Radachse nach rechts gedrückt werden. Bei einem Anhänger, der von einem Rangierantrieb bewegt wird, ergeben sich dieselben Effekte.

Die daraus resultierende Verspannung der Räder gegeneinander führt zu erhöhtem Verschleiß der Räder (Reifen), zu hohen Belastungen am Chassis des Anhängers und im Extremfall zu einer so hohen Reibung, dass die Antriebsrollen der Antriebseinheiten des Rangierantriebs auf der Lauffläche der ihnen zugeordneten Räder durchdrehen.

Es gibt im Stand der Technik verschiedene Ansätze, um das Problem des Verspannens der Räder beim Rangieren auf engem Raum zu vermeiden.

Aus der EP 1 790 555 A1 ist ein Verfahren zum Rangieren eines Anhängers mittels eines Rangierantriebs bekannt, bei dem, um auf engem Raum zu rangieren, der Anhänger in abwechselnden Richtungen entlang gekrümmter Bahnen verfahren wird.

Aus der EP 1 679 251 A2 ist ein Verfahren zum Rangieren eines Anhängers entlang einer Kurvenbahn bekannt, bei dem die Räder auf der Innenseite der Kurvenbahn mit mindestens 10% der Antriebsgeschwindigkeit der Räder auf der Außenseite angetrieben werden.

Die GB 2 466 086 A offenbart ein Verfahren zum Rangieren eines doppelachsigen Anhängers und einen Rangierantrieb für Anhänger gemäß dem Oberbegriff des Anspruchs 1 bzw. 10. Die Aufgabe der Erfindung besteht darin, ein Rangieren des Anhängers auf engstem Raum zu ermöglichen, während gleichzeitig gewährleistet ist, dass sich die Räder des Anhängers nicht über ein zulässig angesehenes Maß hinaus verspannen und dass die Antriebsrollen auf den Laufflächen der Reifen geringstmöglichen Schlupf haben.

Zur Lösung dieser Aufgabe ist erfindungsgemäß ein Verfahren zum Rangieren eines doppelachsigen Anhängers mittels eines Rangierantriebs vorgesehen, wobei der Rangierantrieb eine Steuerung und für jede Seite des Anhängers mindestens eine Antriebsvorrichtung mit Antriebsmotor aufweist, der mindestens ein Rad des Anhängers antreiben kann, dadurch gekennzeichnet, dass die Steuerung, wenn sie den Anhänger so rangiert, dass sich die Räder auf mindestens einer Seite des Anhängers gegeneinander verspannen, einen Verspannungswert errechnet, und dass die Steuerung bei Erreichen eines vordefinierten Verspannungsgrenzwerts ein weiteres Rangieren, das zu einem Verspannen der Räder führt, erst dann wieder zulässt, nachdem der Anhänger mittels des Rangierantriebs so bewegt wurde, dass sich der Verspannungswert verringern konnte. Zur Lösung dieser Aufgabe ist auch ein Rangierantrieb für einen Anhänger vorgesehen, mit mindestens zwei Antriebseinheiten, die an Rädern auf entgegengesetzten Seiten des Anhängers angreifen können, und einer Steuerung, mit der der Anhänger um eine Hochachse gedreht werden kann, wobei die Steuerung ein Verspannungsüberwachungsmodul aufweist, das eingerichtet ist, einen Verspannungsgrenzwert der Rädern zu definieren, einen weiteren Verspannungsgrenzwert der Rädern zu protokollieren und diesen mit dem definierten Verspannungsgrenzwert abzugleichen.

Die Erfindung beruht auf dem Grundgedanken, ein "Verspannungskonto" zu verwenden, das mit einem "Guthaben" gefüllt ist. Wenn der Anhänger so rangiert wird, dass sich die Räder gegeneinander verspannen, wird dieses Guthaben aufgezehrt. Ist kein Guthaben mehr vorhanden, kann der Anhänger nicht mehr weiter in einer Weise rangiert (z.B. auf der Stelle gedreht) werden, dass sich die Räder noch stärker verspannen bzw. sich der Schlupf zwischen Antriebselement und Wohnwagenreifen erhöht. Er kann zunächst lediglich in einer solchen Weise rangiert werden, dass sich die Verspannung der Räder und der Schlupf verringern (z.B. auf der Stelle in der Gegenrichtung gedreht oder geradeaus verfahren werden). Wenn auf diese Weise wieder ein Guthaben erzeugt wurde, ist es erneut möglich, den Anhänger so zu rangieren, dass sich die Räder gegeneinander verspannen und der Schlupf zwischen Antriebselement und Reifen wieder zunimmt. Es ist dabei für die Erfindung ohne Bedeutung, ob das Verfahren mittels der (zentralen) Steuerung ausgeführt wird oder durch die einzelnen Motorsteuerungen, wenn diese geeignet miteinander kommunizieren.

"Verspannen" im Sinne der Erfindung umfasst auch einen Schlupf, der beim Rangieren des Anhängers entsteht. Das erfindungsgemäße Verfahren und der erfindungsgemäße Rangierantrieb gewährleisten, dass der beim Rangieren auftretende Schlupf unterhalb vorbestimmter Grenzen bleibt, so dass der Anhänger ordnungsgemäß rangiert werden kann.

Gemäß einer Ausgestaltung ist vorgesehen, dass ein Rangieren, bei dem sich die Räder verspannen bzw. der Schlupf, in Abhängigkeit von Parametern des Anhängers definiert wird. Dies berücksichtigt, dass bestimmte Parameter wie der Abstand zwischen den Achsen des Anhängers einen Einfluss darauf haben, wie stark sich die Räder des Anhängers, wenn dieser auf engem Raum rangiert wird, gegeneinander verspannen. Es kann also in der Steuerung hinterlegt werden, welche Art von Rangieren wie stark am "Guthaben" zehrt.

Gemäß einer Variante der Erfindung ist vorgesehen, dass ein Rangieren, bei dem sich die Räder verspannen (oder Schlupf auftritt), angenommen wird als ein Drehen des Anhängers um eine Hochachse, bei dem das Verhältnis von Drehwinkel des Anhängers um die Hochachse zu Rangierstrecke des Mittelpunkts zwischen den Rädern des Anhängers oberhalb eines vorbestimmten Werts liegt. Dies berücksichtigt, dass nicht nur ein Drehen des Anhängers auf der Stelle (also mit einer "Rangierstrecke" des Mittelpunkts zwischen den Rädern des Anhängers von Null) zu einem Verspannen der Räder gegeneinander führt, sondern auch ein Rangieren auf beispielsweise einer Kreisbahn mit einem kleinen Radius. Hier sind verschiedene Szenarien denkbar. Erhöht man den Radius ausgehend von Null (also Drehen auf der Stelle) in eine Richtung, gelangt man zunächst in den Bereich, in dem die Räder auf einer Seite einen größeren Weg in eine Richtung zurücklegen als die Räder auf der anderen Seite in der entgegengesetzten Richtung. Der Mittelpunkt der Drehung liegt also zwischen der Mitte des Anhängers und den Rädern auf der Seite, die sich mit der geringeren Geschwindigkeit drehen. Ein Radius, der der halben Breite des Anhängers entspricht, ergibt sich, wenn die Räder (oder wenigstens das Rad, an dem die Antriebsvorrichtung angreift) auf einer Seite festgehalten werden. In diesem Fall verspannen sich die Räder auf der Seite, die stillsteht, offensichtlich erheblich gegeneinander. Ein noch größerer Radius ergibt sich, wenn die Räder auf beiden Seiten des Anhängers in derselben Richtung angetrieben werden, aber mit unterschiedlichen Geschwindigkeiten. Der Anhänger fährt dann eine Kurve, wobei das Maß, um das sich die Räder bei der Kurvenfahrt gegeneinander verspannen, vom Radius der Kurve abhängt. Bei sehr kleinen Kurven verspannen sich die Räder insbesondere auf der Kurveninnenseite, während bei größeren Radien irgendwann der Zustand erreicht wird, bei dem sich eine Verspannung mit üblichen Schräglaufwinkeln abbaut. Erfindungsgemäß kann in der Steuerung hinterlegt werden, welche Rangiervorgänge im Hinblick auf den Verspannungsgrenzwert protokolliert werden, beispielsweise als jeder Rangiervorgang, bei dem der Anhänger entlang einer Kurve verfahren wird, deren Radius kleiner als ein bestimmter Wert ist, z.B. 4 m.

Gemäß einer Ausführungsform der Erfindung ist vorgesehen, dass sich der Verspannungswert wie folgt bestimmt:

$$\text{Verspannungswert } W = v * A - e * R$$

mit:

v: Verspannungsfaktor
A: Anzahl von Motorumdrehungen bei einem Rangiervorgang, der zum Verspannen der Räder führt
e: Entspannungsfaktor
R: Anzahl von Motorumdrehungen bei einem Rangiervorgang, der zu einer Verringerung der Verspannung führt.

Mit dieser Formel kann allgemein und sehr simpel basierend auf der Anzahl von Motorumdrehungen protokolliert werden, welche Verspannung sich beim Rangieren des Anhängers aufbaut. Gestartet wird, sobald der Anhänger derart rangiert wird, dass sich die Räder mindestens auf einer Seite des Anhängers gegeneinander verspannen. Der Verspannungsfaktor v berücksichtigt dabei, wie stark sich die Räder beim aktuellen Rangiervorgang gegeneinander verspannen. Beim Drehen auf der Stelle ist der Verspannungsfaktor eher hoch, während er beim Fahren einer Kurve mit einem kleinen Radius von z.B. 3 m eher niedrig ist. Der Entspannungsfaktor e berücksichtigt, wie gut die Verspannung der Reifen bei einem Rangiervorgang, der zu einer Verringerung der Verspannung führt, abgebaut wird. Wird beispielsweise nach einem Drehen auf der Stelle in einer Richtung anschließend der Anhänger auf der Stelle in der entgegengesetzten Richtung gedreht, ist der Entspannungsfaktor eher hoch. Wird der Anhänger gerade verfahren, ist der Entspannungsfaktor im mittleren Bereich, da sich die Verspannung aufgrund von Schräglaufwinkeln der Reifen abbauen kann. Wird der Anhänger entlang einer Kurve verfahren, ist der Entspannungsfaktor eher niedrig, da einer Verringerung der Verspannung der Reifen durch das Rangieren potentiell entgegenwirkt, dass eine Kurvenfahrt die Räder (insbesondere auf der Kurveninnenseite) wieder gegeneinander verspannt.

In der o.g. Formel wird auf die Motorumdrehungen abgestellt. Diese sind aber lediglich als Synonym für jede andere Einheit oder jeden anderen Parameter zu verstehen, mit dem sinnvoll die Rangierstrecke des Anhängers bzw. das Ausmaß der Drehung der Räder erfasst werden kann.

Anknüpfend an das oben eingeführte Bild eines Guthabens kann mit dieser Formel, sobald der Anhänger beispielsweise auf der Stelle gedreht wird, der Verspannungswert berechnet werden, der das Guthaben abschmilzt. Ist das Guthaben aufgebraucht, kann der Anhänger nicht mehr weiter in einer Weise rangiert werden, dass sich die Räder noch stärker gegeneinander verspannen. Erst wenn der Verspannungswert verringert wurde (also das Guthaben wieder aufgefüllt wurde, indem der Anhänger beispielsweise gerade verfahren wurde), ist es wieder möglich, den Anhänger auf der Stelle zu drehen (oder entlang einer Kurve mit geringem Radius zu verfahren).

Für den Fall, dass zur Verringerung des Verspannens der Räder der Anhänger geradeaus verfahren wird, ist der Entspannungsfaktor e deutlich kleiner als der Verspannungsfaktor v, insbesondere im Bereich von 1/5 bis 1/10 des Faktors v. Dies berücksichtigt, dass eine aufgebaute Verspannung sich bei Geradeausfahrt langsamer abbaut als sie sich beispielsweise beim Drehen auf der Stelle aufbaut.

Bei einem Rangiervorgang, bei dem die Antriebsmotoren in entgegengesetzten Richtungen laufen, werden die Umdrehungen der Antriebsmotoren vorzugsweise betragsmäßig addiert (und nicht mathematisch, da dies zu einem Verspannungswert von Null führen würde).

Alternativ können auch nur die Umdrehungen eines der Antriebsmotoren berücksichtigt werden, vorzugsweise desjenigen Antriebsmotors, der sich mit der höheren Geschwindigkeit dreht.

Bei einem Rangiervorgang, der zu einer Verringerung der Verspannung der Räder führt und bei dem sich die Antriebsmotoren mit unterschiedlichen Geschwindigkeiten drehen, wird vorzugsweise der Mittelwert der Anzahl der Umdrehungen als die Anzahl R angesehen.

Bei einem Rangiervorgang, bei dem sich die Antriebsmotoren mit unterschiedlichen Geschwindigkeiten drehen, wird vorzugsweise der Entspannungsfaktor e gegenüber einem Rangiervorgang, bei dem sich die Antriebsmotoren mit derselben Geschwindigkeit drehen, herabgesetzt. Dies berücksichtigt, dass sich eine Verspannung der Räder bei Kurvenfahrt langsamer abbaut als bei Geradeausfahrt.

Vorzugsweise ist dabei vorgesehen, dass die Reduktion des Faktors e von der Differenz zwischen den Antriebsgeschwindigkeiten auf den beiden Seiten des Anhängers abhängt. Auf diese Weise wird berücksichtigt, dass eine Kurvenfahrt mit größerem Radius eine Verspannung der Räder schneller abbaut als eine Kurvenfahrt mit kleinerem Radius.

Die Erfindung wird nachfolgend anhand eines Ausführungsbeispiels erläutert, das in den beigefügten Zeichnungen dargestellt ist. In diesen zeigen:

Figur 1 einen ersten Schritt des Rangierens eines Anhängers, bis eine vordefinierte Verspannung der Räder des Anhängers gegeneinander erreicht ist; und

Figur 2 weitere mögliche Schritte des Rangierens des Anhängers.

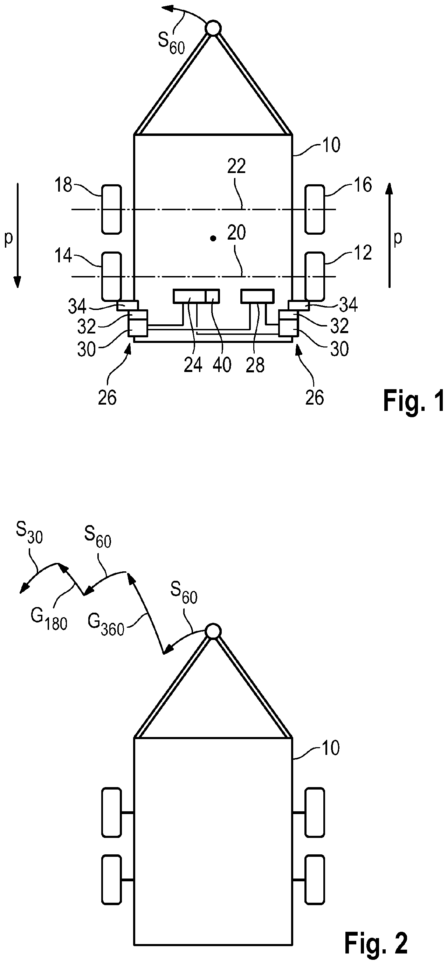

In Figur 1 ist schematisch ein Anhänger 10 mit vier Rädern 12, 14, 16, 18 gezeigt, die paarweise angeordnet sind, so dass zwei Achsen 20, 22 definiert sind.

Der Anhänger ist mit einem Rangiersystem versehen, das als wesentliche Bauteile eine Steuerung 24, zwei Antriebsvorrichtungen 26 sowie eine Batterie 28 aufweist.

Jede Antriebsvorrichtung 26 weist einen Antriebsmotor 30 (inkl. Motorsteuerung) auf, der über ein Getriebe 32 mit einer Antriebsrolle 34 gekoppelt ist. Die Antriebsrolle befindet sich hier im Eingriff mit der Lauffläche des Rades 12, 14, dem sie zugeordnet ist. Wie grundsätzlich von Rangiersystemen bekannt ist, sind die Antriebsvorrichtungen im Ausgangszustand von den ihnen zugeordneten Rädern 12, 14 getrennt.

Beim gezeigten Ausführungsbeispiel ist eine Antriebsvorrichtung 26 je Seite des Anhängers vorgesehen, wobei lediglich eines der Räder auf jeder Seite des Anhängers 10 angetrieben wird. Es ist grundsätzlich auch möglich, mit einer Antriebsvorrichtung gleichzeitig beide Räder 12, 16 bzw. 14, 18 auf einer Seite anzutreiben oder für jedes Rad 12, 14, 16, 18 eine eigene Antriebsvorrichtung zu verwenden.

Die Steuerung 24 weist ein Verspannungsüberwachungsmodul 40 auf, mit dem überwacht wird, wie stark sich die Räder 12, 16 bzw. 14, 18 beim Rangieren des Anhängers gegeneinander verspannen (oder wieviel Schlupf auftritt), und mit dem verhindert werden kann, dass sich die Räder beim Rangieren stärker verspannen (oder mehr Schlupf auftritt), als dies herstellerseitig zugelassen wird. Hierfür ist ein Verspannungsgrenzwert vorgegeben, der konstruktive Gegebenheiten berücksichtigt, beispielsweise die Belastbarkeit der Radaufhängungen des Anhängers und des Chassis.

Zum Rangieren ist eine externe (nicht dargestellte) Bedieneinheit vorgesehen, mit der ein Bediener vorgeben kann, wie der Anhänger rangiert werden soll, beispielsweise gerade verfahren, entlang einer Kurve verfahren oder auf der Stelle gedreht. Die Steuerung gewährleistet, dass die Antriebsmotoren 30 der Antriebsvorrichtungen 26 geeignet betrieben werden, um den gewünschten Verfahrweg des Anhängers 10 zu erhalten.

Zur Versorgung der Antriebsmotoren 30 (und auch der Steuerung 24) dient die Batterie, die aufladbar ist und im Anhänger mitgeführt wird.

In Figur 1 ist ein einfacher Fall eines Rangiervorgangs symbolisiert, der zu einem Verspannen der Räder 12, 16 bzw. 14, 18 einer Seite des Anhängers gegeneinander führt: Der Anhänger 10 wird auf der Stelle um seine Hochachse H gedreht. Hierfür werden die Antriebsmotoren 30 so angesteuert, dass sie sich mit derselben Geschwindigkeit, aber in entgegengesetzten Richtungen drehen. Daher drehen sich auch die mit den Antriebsvorrichtungen 26 gekoppelten Räder 12, 14 mit derselben Geschwindigkeit in entgegengesetzten Richtungen (siehe die Pfeile P in Figur 1). Im Verspannungsüberwachungsmodul 40 ist hinterlegt, dass der Rangiermodus "Drehen auf der Stelle" hinsichtlich des Verspannens der Räder gegeneinander kritisch ist. Daher wird der Rangiervorgang vom Verspannungsüberwachungsmodul 40 überwacht.

Bei diesem Rangiervorgang zählt das Verspannungsüberwachungsmodul 40, wie viele Umdrehungen die Antriebsmotoren 30 durchführen. In einem einfachen Beispiel sei angenommen, dass für den Rangiermodus "Drehen auf der Stelle" ein Verspannungsgrenzwert von 60 Umdrehungen im Verspannungsüberwachungsmodul 40 hinterlegt ist. Dieser Wert kann als "Guthaben" betrachtet werden.

Sobald der Wert von 60 Umdrehungen in einer Richtung (und entsprechend 60 entgegengesetzten Umdrehungen des Antriebsmotors auf der anderen Seite des Anhängers) erreicht ist, ist das Guthaben aufgebraucht, und ein weiteres Drehen des Anhängers auf der Stelle in derselben Richtung wird von der Steuerung 24 nicht mehr zugelassen. Dieser Zustand ist mit dem Schwenkwinkel S60 der Deichsel des Anhängers in Figur 1 symbolisiert; der Schwenkwinkel ist der maximal zulässige Schwenkwinkel beim Drehen auf der Stelle, bei dem der vorgegebene Verspannungsgrenzwert erreicht ist.

In diesem Zustand erlaubt die Steuerung 24 zunächst nur noch Rangiermanöver, die zu einer Verringerung der Verspannung der Räder führen.

Dies kann natürlich ein Drehen des Anhängers auf der Stelle in der entgegengesetzten Richtung sein, und zwar um maximal 120 Umdrehungen (also mit den ersten 60 Umdrehungen wieder in die Ausgangsstellung, in der die Räder wieder verspannungsfrei sind, und dann mit den zweiten 60 Umdrehungen bis zum Verspannungsgrenzwert in der entgegengesetzten Richtung). In der Praxis ist dieses Rangiermanöver aber eher weniger interessant, wenn man von den Fällen absieht, in denen der Bediener ausprobiert, welche Manöver grundsätzlich möglich oder zulässig sind.

Von praktischer Bedeutung ist vielmehr, dass der Anhänger, wenn der Verspannungsgrenzwert erreicht ist (also das Guthaben aufgebraucht ist), verfahren wird, und zwar insbesondere entlang einer Geraden. Hierbei verringert sich die Verspannung der Räder. Da dies aber (bezogen auf eine Motorumdrehung) langsamer vor sich geht, als sich beim Drehen auf der Stelle die Verspannung aufbaut, ist im Verspannungsüberwachungsmodul ein Entspannungsfaktor e hinterlegt, der kleiner 1 ist, beispielsweise 1/6. Dies bedeutet, dass zum vollständigen Abbauen der Verspannung, die sich beim Drehen auf der Stelle mit 60 Umdrehungen der Antriebsmotoren aufgebaut haben, ein Rangieren des Anhängers 10 entlang einer Geraden mit 360 Motorumdrehungen nötig ist (siehe die Gerade G360 in Figur 2). Hierdurch wird der Verspannungswert wieder abgebaut (oder das Guthaben wieder maximal aufgefüllt).

In Figur 2 ist zu sehen, dass im Anschluss an die Gerade G360, mit der das Guthaben wieder maximal aufgefüllt wurde, wieder ein Drehen auf der Stelle um den maximalen Schwenkwinkel S60 möglich ist.

Wird anschließend der Anhänger 10 nur um eine kleinere Strecke geradeaus verfahren (beispielsweise mit 180 Motorumdrehungen entlang der Geraden G180), ist das Guthaben nur teilweise wieder aufgefüllt (in diesem Beispiel nur zur Hälfte). Somit ist es auch nur möglich, den Anhänger 10 nur um die Hälfte des maximalen Schwenkwinkels auf der Stelle um die Hochachse zu drehen (hier also nur um den Schwenkwinkel S30). Natürlich kann der Anhänger in diesem Zustand mit 90 Motorumdrehungen in der entgegengesetzten Richtung auf der Stelle gedreht werden (also mit 30 Motorumdrehungen in die "Mittelstellung" und mit weiteren 60 Motorumdrehungen bis zum Verspannungsgrenzwert in der anderen Richtung).

Über dieses vereinfachte Beispiel hinaus, bei dem nur ein Drehen auf der Stelle und ein Rangieren entlang einer Geraden betrachtet wird, sind verschiedene Zwischen-Rangiervorgänge bekannt, bei denen der Anhänger nicht auf der Stelle gedreht wird, sondern entlang einer Kurve mit kleinem Radius verfahren wird, oder der Anhänger nicht entlang einer Geraden verfahren wird, sondern entlang einer Kurve mit großem Radius. Für all diese Rangiervorgänge kann die Auswirkung auf das Verspannen der Räder gegeneinander (also im Sinne einer Erhöhung der Verspannung oder im Sinne einer Verringerung der Verspannung) gewichtet berücksichtigt werden.

Wird der Anhänger beispielsweise entlang einer Kurve mit einem Radius vom 3 m verfahren, können im Verspannungsüberwachungsmodul 40 als Verspannungsgrenzwert beispielsweise 120 Motorumdrehungen des Motors auf der Kurveninnenseite hinterlegt sein. Alternativ kann, wenn mittels der oben genannten Formel gearbeitet wird, ein Verspannungsfaktor v verwendet werden, der bei diesem Beispiel halb so groß ist wie für den Rangiermodus "Drehen auf der Stelle".

Der Verspannungsgrenzwert kann auch den Reibwert zwischen den Rädern und dem Untergrund berücksichtigen. Wird der Anhänger auf einem Untergrund mit hohem Reibwert rangiert, beispielsweise Asphalt oder Beton, führt ein Drehen des Anhängers um einen bestimmten Winkel zu einer größeren Verspannung der Räder gegeneinander als bei einem Drehen des Anhängers auf einem Untergrund mit einem geringen Reibwert, beispielsweise auf einer Wiese. In diesem Fall kann die Steuerung beim Rangieren auf dem Untergrund mit dem geringerem Reibwert ein Drehen oder Schwenken um einen größeren Winkel zulassen (also eine größere Anzahl an Motorumdrehungen) als beim Rangieren auf dem Untergrund mit dem höheren Reibwert.

Den aktuellen Reibwert kann die Steuerung näherungsweise anhand des Anstiegs des Drehmoments ermitteln, der sich beim Drehen auf der Stelle aufgrund des Verspannens der Räder gegeneinander ergibt. Auf einem Untergrund mit hohem Reibwert steigt das erforderliche Drehmoment sehr viel stärker an als beim Rangieren auf einem Untergrund mit niedrigem Reibwert.

## Patentansprüche

1. Verfahren zum Rangieren eines doppelachsigen Anhängers (10) mittels eines Rangierantriebs (24, 26), wobei der Rangierantrieb eine Steuerung (24) und für jede Seite des Anhängers (10) mindestens eine Antriebsvorrichtung (26) mit Antriebsmotor (30) aufweist, der mindestens ein Rad (12, 14) des Anhängers (10) antreiben kann, **dadurch gekennzeichnet, dass** die Steuerung (24), wenn sie den Anhänger (10) so rangiert, dass sich die Räder (12, 14, 16, 18) auf mindestens einer Seite des Anhängers (10) gegeneinander verspannen, einen Verspannungswert errechnet, und dass die Steuerung bei Erreichen eines vordefinierten Verspannungsgrenzwerts ein weiteres Rangieren, das zu einem Verspannen der Räder (12, 14, 16, 18) führt, erst dann wieder zulässt, nachdem der Anhänger (10) mittels des Rangierantriebs (24, 26) so bewegt wurde, dass sich der Verspannungswert verringern konnte.

2. Verfahren nach Anspruch 1, **dadurch gekennzeichnet, dass** ein Rangieren, bei dem sich die Räder (12, 14, 16, 18) verspannen, in Abhängigkeit von Parametern des Anhängers (10) definiert wird.

3. Verfahren nach Anspruch 1 oder Anspruch 2, **dadurch gekennzeichnet, dass** ein Rangieren, bei dem sich die Räder (12, 14, 16, 18) verspannen, angenommen wird als eine Drehen des Anhängers (10) um eine Hochachse, bei dem das Verhältnis von Drehwinkel des Anhängers (10) um die Hochachse zu Rangierstrecke des Mittelpunkts zwischen den Rädern (12, 14, 16, 18) des Anhängers (10) oberhalb eines vorbestimmten Werts liegt.

4. Verfahren nach einem der vorhergehenden Ansprüche, **dadurch gekennzeichnet, dass** der Verspannungswert wie folgt berechnet wird:

$$\text{Verspannungswert } W = v * A - e * R \text{ mit:}$$

v: Verspannungsfaktor
A: Anzahl von Motorumdrehungen bei einem Rangiervorgang, der zum Verspannen der Räder führt
e: Entspannungsfaktor
R: Anzahl von Motorumdrehungen bei einem Rangiervorgang, der zu einer Verringerung der Verspannung führt

5. Verfahren nach Anspruch 4, **dadurch gekennzeichnet, dass** der Faktor e deutlich kleiner ist als der Faktor v, insbesondere im Bereich von 1/5 bis 1/10 des Faktors v liegt.

6. Verfahren nach Anspruch 4 oder Anspruch 5, **dadurch gekennzeichnet, dass** bei einem Rangiervorgang, bei dem die Antriebsmotoren (30) in entgegengesetzten Richtungen laufen, die Umdrehungen betragsmäßig addiert werden.

7. Verfahren nach einem der Ansprüche 4 bis 6, **dadurch gekennzeichnet, dass** bei einem Rangiervorgang, der zu einer Verringerung der Verspannung der Räder (12, 14, 16, 18) führt und bei dem sich die Antriebsmotoren (30) mit unterschiedlichen Geschwindigkeiten drehen, der Mittelwert der Anzahl der Umdrehungen als die Anzahl R angesehen wird.

8. Verfahren nach einem der Ansprüche 4 bis 7, **dadurch gekennzeichnet, dass** der Faktor e bei einem Rangiervorgang, bei dem sich die Antriebsmotoren (30) mit unterschiedlichen Geschwindigkeiten drehen, gegenüber einem Rangiervorgang, bei dem sich die Antriebsmotoren (30) mit derselben Geschwindigkeit drehen, herabgesetzt wird.

9. Verfahren nach einem der Ansprüche 4 bis 8, **dadurch gekennzeichnet, dass** die Reduktion des Faktors e von der Differenz zwischen den Antriebsgeschwindigkeiten auf den beiden Seiten des Anhängers (10) abhängt.

10. Rangierantrieb für einen Anhänger, mit mindestens zwei Antriebseinheiten, die an Rädern (12, 14, 16, 18) auf entgegengesetzten Seiten des Anhängers (10) angreifen können, und einer Steuerung (24), mit der der Anhänger (10) um eine Hochachse gedreht werden kann, wobei die Steuerung (24) ein Verspannungsüberwachungsmodul (40) aufweist, das eingerichtet ist, einen Verspannungsgrenzwert der Rädern zu definieren, einen weiteren Verspannungswert der Rädern zu protokollieren und diesen mit dem definierten Verspannungsgrenzwert abzugleichen.

**Claims**

1. Method for manoeuvring a dual axle trailer (10) by means of a manoeuvring drive (24, 26), wherein the manoeuvring drive comprises a controller (24) and for each side of the trailer (10) at least one drive device (26) having a drive motor (30) that can drive at least one wheel (12, 14) of the trailer (10), **characterised in that** if the controller (24) manoeuvres the trailer (10) in such a manner that the wheels (12, 14, 16, 18) on at least one side of the trailer (10) are distorted with respect to one another, the controller (24) calculates a distorsion value, and that the controller when a predefined distorsion limit value is reached only permits a further manoeuvre that leads to the wheels (12, 14, 16, 18) being distorted after the trailer (10) has been moved by means of the manoeuvring drive (24, 26) in such a manner that the distorsion value could be reduced.

2. Method according to claim 1, **characterised in that** a manoeuvre in which the wheels (12, 14, 16, 18) are distorted is defined in dependence upon parameters of the trailer (10).

3. Method according to claim 1 or claim 2, **characterised in that** a manoeuvre in which the wheels (12, 14, 16, 18) are distorted is performed as a rotation of the trailer (10) about a vertical axis in which the ratio of the angle of rotation of the trailer (10) about the vertical axis to the manoeuvre length of the centre point between the wheels (12, 14, 16, 18) of the trailer (10) lies above a predetermined value.

4. Method according to any one of the preceding claims, **characterised in that** the distorsion value is calculated as follows:

$$\text{Distorsion value } W = v * A\text{-}e * R$$

with:

v: distorsion factor
A: number of motor rotations during a manoeuvring procedure that leads to the wheels being distorted
e: relaxation factor
R: number of motor rotations during a manoeuvring procedure that leads to the reduction in the distorsion

5. Method according to claim 4, **characterised in that** the factor e is clearly smaller than the factor v, in particular lies in the range 1/5 to 1/10 of the factor v.

6. Method according to claim 4 or claim 5, **characterised in that** during a manoeuvring procedure in which the drive motors (30) run in opposing directions the rotations are summed according to the amount.

7. Method according to any one of the claims 4 to 6, **characterised in that** during a manoeuvring procedure that leads to a reduction in the distorting of the wheels (12, 14, 16, 18) and in which the drive motors (30) rotate at different speeds, the average value of the number of the rotations is seen as the number R.

8. Method according to any one of the claims 4 to 7, **characterised in that** the factor e is reduced during a manoeuvring procedure in which the drive motors (30) rotate at different speeds, with respect to a manoeuvring procedure in which the drive motors (30) rotate at the same speed.

9. Method according to any one of the claims 4 to 8, **characterised in that** the reduction of the factor e depends on the difference between the drive speeds on the two sides of the trailer (10).

10. Manoeuvring drive for a trailer, said manoeuvring drive having at least two drive units that can engage wheels (12, 14, 16, 18) on opposite sides of the trailer (10), and a controller (24) with which it is possible to rotate the trailer about a vertical axis, wherein the controller (24) comprises a distorsion monitoring module (40) that is configured for the purpose of defining a distorsion limit value of the wheels, recording a further distorsion value of the wheels and comparing said distorsion value with the defined distorsion limit value.

## Revendications

**1.** Procédé de manoeuvre d'une remorque (10) à deux essieux au moyen d'un entraînement de manoeuvre (24, 26), l'entraînement de manoeuvre comprenant une commande (24) et pour chaque côté de la remorque (10) au moins un dispositif d'entraînement (26) présentant un moteur d'entraînement (30) qui est apte à entraîner au moins une roue (12, 14) de la remorque (10), **caractérisé en ce que** la commande (24), lorsqu'elle manoeuvrela remorque (10) de sorte que les roues (12, 14, 16, 18) sont contraintes l'une contre l'autre au moins d'un côté de la remorque (10), calcule une valeur de contrainte, et **en ce que** la commande, lorsqu'une valeur de contrainte limite prédéfinie est atteinte, admet une manoeuvre supplémentaire provoquant une contrainte des roues (12, 14, 16, 18) uniquement après le déplacement de la remorque (10) au moyen de l'entraînement de manoeuvre (24, 26) de sorte que la valeur de contrainte ait pu diminuer.

**2.** Procédé selon la revendication 1, **caractérisé en ce qu'**une manoeuvre lors de laquelle les roues (12, 14, 16, 18) sont contraintes est définie en fonction de paramètres de la remorque (10).

**3.** Procédé selon la revendication 1 ou la revendication 2, **caractérisé en ce qu'**une manoeuvre lors de laquelle les roues (12, 14, 16, 18) sont contraintes est supposée être une rotation de la remorque (10) autour d'un axe vertical, dans laquelle le rapport entre l'angle de rotation de la remorque (10) autour de l'axe vertical et la longueur de manoeuvre du point médian entre les roues (12, 14, 16, 18) de la remorque (10) est supérieur à une valeur prédéterminée.

**4.** Procédé selon l'une des revendications précédentes, **caractérisé en ce que** la valeur de contrainte est calculée comme suit :

$$\text{valeur de contrainte } W = v * A - e * R,$$

avec:

v : facteur de contrainte
A : nombre de tours du moteur lors d'une opération de manoeuvre menant à une contrainte des roues
e : facteur de détente
R : nombre de tours du moteur lors d'une opération de manoeuvre menant à une diminution de la contrainte

**5.** Procédé selon la revendication 4, **caractérisé en ce que** le facteur e est nettement inférieur au facteur v, en particulier dans une plage de 1/5 à 1/10 du facteur v.

**6.** Procédé selon la revendication 4 ou la revendication 5, **caractérisé en ce que** lors d'une opération de manoeuvre lors de laquelle les moteurs d'entraînement (30) tournent dans des sens opposés, les valeurs de tours sont additionnées.

**7.** Procédé selon l'une des revendications 4 à 6, **caractérisé en ce que** lors d'une opération de manoeuvre menant à une diminution de la contrainte des roues (12, 14, 16, 18) et lors de laquelle les moteurs d'entraînement (30) tournent à différentes vitesses, la valeur moyenne du nombre de tours est considérée comme le nombre R.

**8.** Procédé selon l'une des revendications 4 à 7, **caractérisé en ce que** lors d'une opération de manoeuvre lors de laquelle les moteurs d'entraînement (30) tournent à différentes vitesses, le facteur e est diminué par rapport à une opération de manoeuvre lors de laquelle les moteurs d'entraînement (30) tournent à une même vitesse.

**9.** Procédé selon l'une des revendications 4 à 8, **caractérisé en ce que** la réduction du facteur e dépend de la différence entre les vitesses d'entraînement des deux côtés de la remorque (10).

**10.** Entraînement de manoeuvre pour remorque, comportant au moins deux unités d'entraînement qui sont aptes à s'engager sur des roues (12, 14, 16, 18) sur des côtés opposés de la remorque (10), et une commande (24) au moyen de laquelle la remorque (10) peut être tournée autour d'un axe vertical, la commande (24) présentant un module de surveillance de contrainte (40) qui est aménagé de manière à définir une valeur de contrainte limite des roues, à enregistrer une valeur de contrainte supplémentaire des roues, et à comparer celle-ci avec la valeur de contrainte limite définie.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1790555 A1
- EP 1679251 A2
- GB 2466086 A